(19) **Europäisches Patentamt / European Patent Office / Office européen des brevets**

(11) **EP 2 565 627 B1**

(12) **FASCICULE DE BREVET EUROPEEN**

(45) Date de publication et mention
de la délivrance du brevet:
**09.04.2014 Bulletin 2014/15**

(51) Int Cl.:
**G01N 21/64** (2006.01) **G01N 21/78** (2006.01)

(21) Numéro de dépôt: **12182120.1**

(22) Date de dépôt: **29.08.2012**

(54) **Dispositif d'éclairage d'un objet avec une source de lumière munie d'un moyen de prélèvement d'une portion de la lumière pour mesurer des variations de flux de la source**

Vorrichtung zur Beleuchtung eines Objekts mit einer Lichtquelle umfassend Mitteln zur Probeentnahme eines Lichtanteils um Variationen der Lichtquelleintensität zu messen.

Apparatus for illumination of an object with a light source provided with a means for sampling a portion of the light to measure variations in the intensity of the source.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2011 FR 1157811**

(43) Date de publication de la demande:
**06.03.2013 Bulletin 2013/10**

(73) Titulaire: **Commissariat à l'Énergie Atomique et aux Énergies Alternatives 75015 Paris (FR)**

(72) Inventeurs:
• **Perraut, François**
**38134 Saint-Joseph de Rivière (FR)**
• **Flahaut, Thierry**
**38220 Cholonge (FR)**

(74) Mandataire: **Ilgart, Jean-Christophe BREVALEX 95, rue d'Amsterdam 75378 Paris Cedex 8 (FR)**

(56) Documents cités:
**WO-A2-2004/055502    US-B1- 6 511 222 US-B1- 6 614 215**

• **SCHULTZ ET AL: "A novel fluorescence-based array biosensor: Principle and application to DNA hybridization assays", BIOSENSORS AND BIOELECTRONICS, ELSEVIER BV, NL, vol. 23, no. 7, 22 octobre 2007 (2007-10-22), pages 987-994, XP022440001, ISSN: 0956-5663, DOI: 10.1016/J.BIOS.2007.10.006**
• **NEMETH ET AL: "Real-time study of the effect of different stress factors on lactic acid bacteria by electrochemical optical waveguide lightmode spectroscopy", BIOMOLECULAR ENGINEERING, ELSEVIER, NEW YORK, NY, US, vol. 24, no. 6, 22 octobre 2007 (2007-10-22), pages 631-637, XP022358138, ISSN: 1389-0344**

EP 2 565 627 B1

**Description**

**DOMAINE TECHNIQUE**

La présente invention concerne un dispositif d'éclairage d'un objet.

Elle s'applique notamment à tous les domaines dans lesquels on utilise une source de lumière dont on veut corriger les variations de flux lumineux.

Par exemple, le dispositif, objet de l'invention, peut-être utilisé dans un photomètre, un spectrophotomètre, un fluorimètre, un spectrofluorimètre, un microscope, un scanner, et un appareil d'éclairage d'une scène (cette dernière constituant alors l'objet).

Ce dispositif est plus particulièrement utilisable dans tous les instruments de mesure optique pour lesquels le résultat de la mesure dépend du flux d'une source dite « source d'excitation » ou « source d'éclairement », par exemple un photomètre d'absorption ou de fluorescence.

Plus généralement, ce dispositif est utilisable avec tout instrument de mesure optique, destiné à effectuer des mesures de fluorescence, en mode spectrométrique ou non.

Ce dispositif est tout particulièrement utilisable dans le cas où l'on veut effectuer la régulation du flux d'une source lumineuse, par exemple dans un appareil de détection et de dosage de substances biologiques ou chimiques, contenues dans un fluide (liquide ou gaz).

**ÉTAT DE LA TECHNIQUE ANTÉRIEURE**

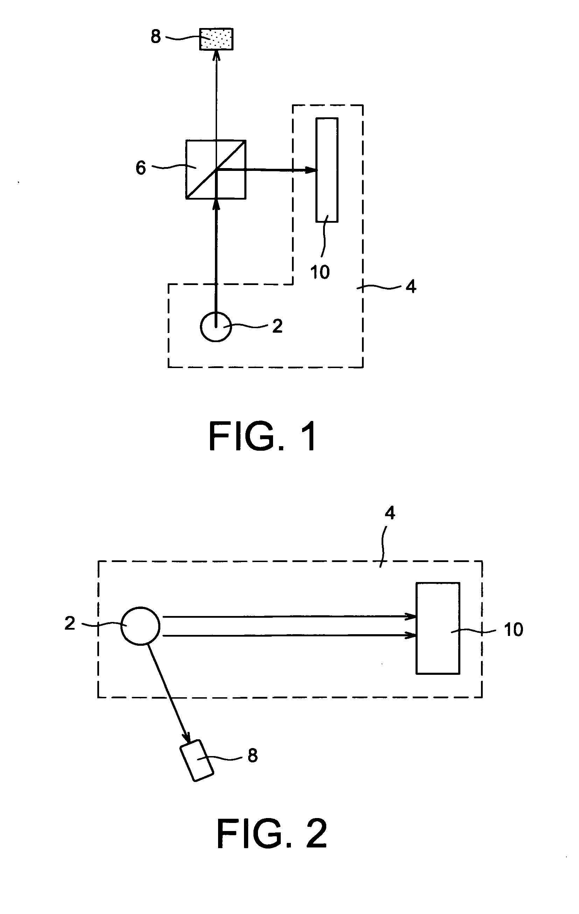

La figure 1 est une vue schématique d'un dispositif connu, pour mesurer les variations de flux lumineux d'une source de lumière 2, faisant partie d'un appareil 4. Ce dispositif comprend un séparateur de faisceau (en anglais, *beam splitter*) 6 et un photodétecteur 8.

Le séparateur de faisceau 6 transmet une faible portion de la lumière émise par la source 2 au photodétecteur 8 ; et la majeure partie de cette lumière est utilisée par un autre composant 10 de l'appareil 4.

Ainsi est-il possible de mesurer toute variation du flux lumineux de la source 2 par le photodétecteur 8.

Un autre dispositif connu (figure 2) utilise simplement le photodétecteur 8. Ce dernier est placé au voisinage de la source 2 et permet de mesurer une portion de la lumière émise par la source 2 mais non utilisée par l'autre composant 10 du système 4.

Lorsque l'on effectue une mesure de fluorescence, le flux d'émission de fluorescence dépend du flux d'excitation. Et la relation liant ce dernier au flux d'émission de fluorescence dépend des propriétés du matériau sensible, utilisé pour la mesure.

On peut utiliser une couche très mince de matériau sensible. C'est typiquement le cas des biopuces pour lesquelles la distribution des fluorophores est équivalente à un film monomoléculaire.

Dans ce cas, la relation qui lie le flux d'émission de fluorescence $F_{em}$ au flux d'excitation $F_{ex}$ est la suivante :

$$F_{em} = D_{Pex} \cdot \sigma_a \cdot QE_f \cdot \Gamma_f \cdot S \propto D_{Pex} \cdot S \propto F_{ex} \qquad (1)$$

Les symboles utilisés dans cette relation ont les significations suivantes :

$D_{Pex}$ (en W/m$^2$) : densité de puissance mesurée après le filtre d'excitation qui est utilisé pour la mesure ;

$\sigma_a$ (en m) : section efficace maximale, donnée par le fournisseur du matériau sensible, ou calculée à partir du coefficient d'extinction molaire ;

$QE_f$ : rendement quantique d'émission des marqueurs fluorescents ;

$\Gamma_f$ (en m$^{-2}$) : densité des fluorophores,

$S$ (en m$^2$) : surface éclairée du matériau sensible ; et

$\propto$ : symbole traduisant une relation de proportionnalité.

Pour la relation (1), on considère que la source lumineuse utilisée émet la même énergie à toutes les longueurs d'ondes et que la section efficace et le rendement quantique sont constants pour toutes les longueurs d'ondes.

On précise que cette approximation n'a pas d'incidence sur la présente invention.

La couche de matériau sensible utilisée peut être plus épaisse. C'est par exemple le cas pour certains matériaux qui sont sensibles à des composés chimiques (par exemple polymères ou sols-gels) ou a des solutions liquides.

Le phénomène d'absorption de la lumière est alors bien décrit par la loi de Beer-Lambert :

$$I_a = I_0 \cdot exp(-\varepsilon \cdot l \cdot c) \propto I_0 \qquad\qquad (2)$$

où $I_0$ représente l'intensité de la lumière qui est reçue par le matériau sensible, et $I_a$ représente l'intensité de la lumière absorbée par ce dernier.

La fluorescence émise peut alors être décrite par la relation suivante :

$$F_{em} = F_{ex} \cdot exp(-\varepsilon \cdot l \cdot c) \cdot QE_f \propto F_{ex} \qquad\qquad (3)$$

Les symboles $\varepsilon$, l, c utilisés dans ces relations ont les significations suivantes :

$\varepsilon$ (en $1.mol^{-1}.cm^{-1}$) : coefficient d'extinction molaire ;
$l$ (en cm) : épaisseur du matériau ; et
$c$ (en mol) : concentration en fluorophore dans le matériau.

Pour les relations (2) et (3), on a appliqué la même approximation sur les longueurs d'ondes que pour la relation (1).

Par ailleurs, la relation (2) s'applique à une mesure de transmission : l'information, ou « signal spécifique », est obtenue en mesurant l'atténuation de la lumière lorsque celle-ci traverse le milieu étudié.

Les relations (1), (2) et (3) montrent que toute variation du flux de lumière de la source se traduit par une variation linéaire de ce flux, qu'il soit déterminé par une mesure de fluorescence, de transmission, de diffusion, ou de réflexion.

Cette variation du flux de lumière de la source provoque un biais pour les mesures. S'il n'est pas corrigé, ce biais introduit un bruit dans ces mesures et réduit les performances de l'instrument utilisé pour celles-ci.

Les deux techniques de prélèvement d'une portion du flux de la source, qui ont été décrites en faisant référence aux figures 1 et 2, ne sont pas adaptées à un appareil de détection et de dosage de substances biologiques ou chimiques, contenues dans un liquide ou un gaz, tel que l'appareil qui est décrit dans le document suivant, auquel on se reportera :

[1] E. Schultz et al., Biosensors and Bioelectronics, vol. 23 (2008), pages 987 à 994.

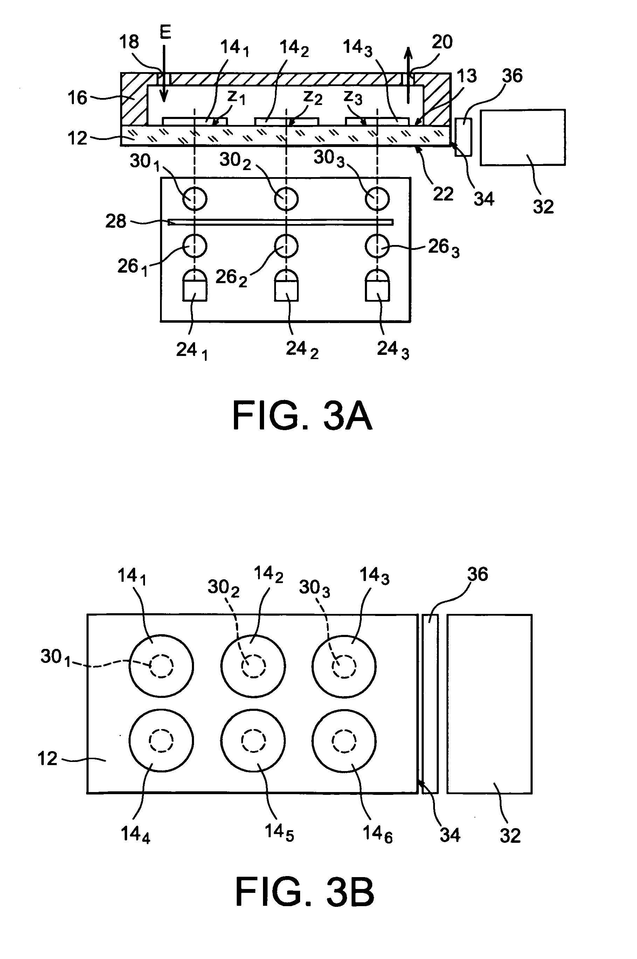

La figure 3A est une vue en coupe schématique de cet appareil ; et la figure 3B en est une vue de dessus schématique.

Le document US 6 511222 B1 divulgue un système comprenant une source lumineuse, une fibre optique, un élément diffractif et plan et un réseau de Bragg situé devant une partie sensible d'une fibre optique. La fonction du réseau est de réfléchir une partie du spectre émis par la source vers un détecteur correspondant pour obtenir un signal de référence qui n'est pas sensible aux variations de la température dans la partie de fibre. La partie du spectre qui est transmise par le réseau passe à travers la partie sensible de fibre deux fois compte tenu de la fonction du miroir. A cause de l'élément diffractif cette partie du spectre arrive à l'autre détecteur. Compte tenu de la fonction du système pour étalonnage et la définition des détecteurs comme détecteur de mesure et détecteur de référence un traitement du signal de mesure avec le signal de référence est implicite dans cette divulgation.

Ci-après, on décrit brièvement la constitution et le fonctionnement de l'appareil qui est représenté sur les figures 3A et 3B.

Il comprend un support transparent 12, en forme de lame, par exemple en verre, en silice, en quartz, ou en plastique. Sur des parties distinctes de la face supérieure 13 de ce support 12, appelées « zones d'interrogation », on dispose respectivement différents matériaux, dits matériaux capteurs, qui sont sensibles à des composés d'orgine biologique ou chimique.

Ces matériaux capteurs sont fluorescents et leurs propriétés de fluorescence sont modifiées lorsqu'ils sont exposés aux composés que l'on veut détecter ou doser.

Sur la figure 3A, seuls les matériaux capteurs $14_1$, $14_2$, $14_3$ et les zones d'interrogation correspondantes $z_1$, $z_2$, $z_3$ sont représentés ; et, sur la figure 3B, les matériaux capteurs $14_1$ à $14_6$ sont représentés.

Les matériaux capteurs sont exposés à un échantillon liquide ou gazeux E qui est susceptible de contenir les composés que l'on souhaite détecter ou doser.

Pour ce faire, le support 12 est éventuellement placé dans une chambre à circulation 16 munie d'un orifice d'entrée 18 et d'un orifice de sortie 20 permettant respectivement l'introduction de l'échantillon dans la chambre à circulation 16 et l'évacuation de l'échantillon de celle-ci.

Dans l'appareil qui est représenté sur les figures 3A et 3B, la chambre à circulation 16 repose sur la face supérieure du support 12, comme on le voit ; et la figure 3B est une vue de dessus de l'appareil privé de la chambre à circulation.

Cet appareil comprend aussi des sources de lumière qui sont respectivement placées en regard des zones d'interrogation, sous la face inférieure 22 du support transparent 12.

Sur la figure 3A, on a seulement représenté les sources de lumière $24_1$, $24_2$, $24_3$ qui correspondent respectivement aux zones d'interrogation $z_1$, $z_2$, $z_3$.

La lumière d'excitation, provenant de chaque source, est optiquement mise en forme par l'intermédaire, successivement, d'une première lentille, d'un filtre permettant de sélectionner un intervalle spectral optimal, et d'une deuxième lentille.

Sur la figure 3A, on a seulement représenté :

- les lentilles $26_1$, $26_2$, $26_3$ qui sont respectivement situées en regard des sources $24_1$, $24_2$, $243$,
- le filtre 28 qui suit ces lentilles, et
- les lentilles $30_1$, $30_2$, $30_3$ qui suivent le filtre 28.

Comme on le voit, chaque ensemble lentille-filtre-lentille, tel que l'ensemble lentille $26_1$-filtre 28-lentille $30_1$, est respectivement associé à l'une des sources, telle que la source $24_1$, et se trouve en regard du support 12.

On précise toutefois que les moyens (lentilles et filtre) de mise en forme de la lumière d'excitation sont facultatifs.

En outre, un photodétecteur 32 est placé devant l'un 34 des côtés du support 12 ; et un filtre 36 est éventuellement placé entre ce côté 34 et le photodétecteur 32.

La lecture du support 12, comportant les zones d'interrogation, est effectuée en allumant puis en éteignant les sources de lumière les unes après les autres, et en synchronisant l'allumage-extinction de chaque source avec la mesure du flux de fluorescence émis par la zone d'interrogation correspondante.

Des moyens appropriés (non représentés) sont prévus pour commander les allumages-extinctions successifs, en synchronisant les mesures avec ceux-ci.

Le photodétecteur 32 (qui effectue les mesures) fournit des signaux électriques, représentatifs des flux lumineux lui parvenant successivement, à des moyens électroniques de traitement appropriés (non représentés).

La lumière de fluorescence est conduite, par réflexion totale, jusqu'au côté 34 du support 12, puis détectée par le photodétecteur 32.

L'appareil des figures 3A et 3B permet donc d'interroger plusieurs zones d'interrogation en allumant successivement des sources de lumière distinctes.

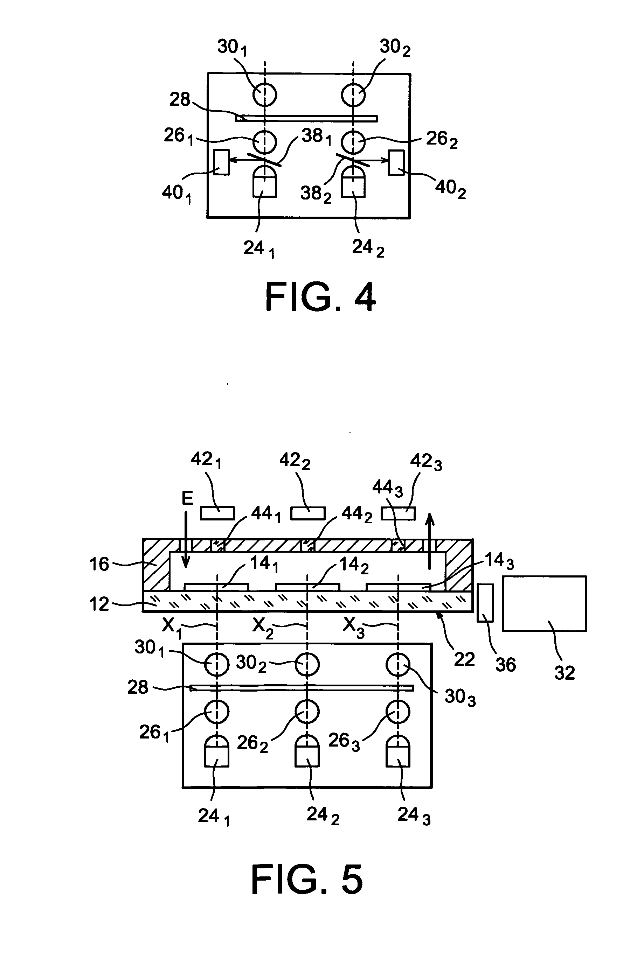

La figure 4 illustre schématiquement une technique pour prélever une portion du flux de chaque source de lumière : chaque source est associée à un séparateur de faisceau et à un photodétecteur auxiliaire, ou photodétecteur de référence.

Sur la figure 4, on a simplement représenté les séparateurs de faisceau $38_1$, $38_2$ et les photodétecteurs auxiliaires $40_1$, $40_2$.

Comme on le voit, le séparateur de faisceau $38_1$ (ou $38_2$) est disposé à la suite de la source $24_1$ (ou $24_2$) mais avant la lentille $26_1$ (ou $26_2$), quand cette dernière existe, et réfléchit une partie de la lumière émise par la source $24_1$ (ou $24_2$) en direction du photodétecteur auxiliaire $40_1$ (ou $40_2$).

Toutefois, un tel ensemble de séparateurs de faisceau-photodétecteurs auxiliaires est encombrant et difficile à mettre en place. De plus, la technique illustrée par la figure 4 nécessite de multiplexer physiquement les mesures de référence.

Rappelons que ces mesure de référence permettent de connaître les variations de flux des diverses sources de lumière, par exemple en vue de réguler ces sources pour qu'elles émettent chacune un flux sensiblement constant.

La figure 5 illustre schématiquement une autre technique pour prélever une portion du flux de chaque source de lumière : un photodétecteur auxiliaire est placé sur l'axe optique correspondant à cette source, au-dessus de la chambre à circulation, ou chambre de réaction ; et une fenêtre transparente est prévue dans la paroi de la chambre, sur l'axe optique.

Sur la figure 5, on a seulement représenté les photodétecteurs auxiliaires $42_1$, $42_2$, $42_3$, les axes optiques $X_1$, $X_2$, $X_3$ et les fenêtres $44_1$, $44_2$, $44_3$ qui sont respectivement associés aux sources $24_1$, $24_2$, $24_3$.

A titre d'exemple, on voit que la lumière émise par la source $24_1$, suivant l'axe $X_1$, traverse la lame 12, interagit avec le matériau $14_1$, traverse la fenêtre $44_1$ et atteint le photodétecteur auxiliaire $42_1$.

Un tel dispositif induit de fortes contraintes sur la chambre à circulation : comme dans le cas de l'exemple illustré par la figure 4, il est nécessaire d'avoir autant de photodétecteurs auxiliaires, ou photodétecteurs de référence, que de sources de lumière ; en outre, il est nécessaire de multiplexer physiquement les mesures de référence.

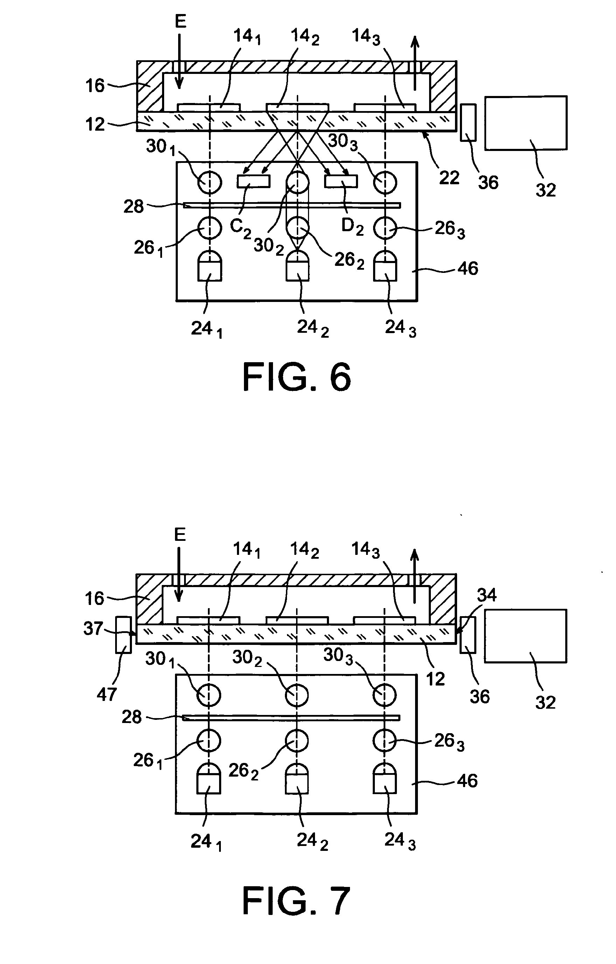

La figure 6 illustre schématiquement une variante de la figure 5, selon laquelle on mesure une portion de la lumière réfléchie par la face inférieure 22 du support transparent, au moyen d'une paire de photodétecteurs auxiliaires, ou photodétecteurs de référence.

Ces derniers sont prévus, en plus des sources, dans les moyens d'éclairage 46 comprenant les sources et les éventuels moyens de mise en forme de la lumière émise par ces sources.

Sur la figure 6, on a simplement représenté la paire de photodétecteurs de référence $C_2$, $D_2$ qui sont associés à la source $24_2$ et placés au niveau de la lentille $30_2$ correspondante, de part et d'autre de celle-ci, en regard de la face 22 de la lame 12.

Cette autre technique exige aussi d'avoir plusieurs photodétecteurs de référence, et donc un système d'éclairage plus complexe, ainsi qu'un multiplexage physique des mesures de référence.

Pour réduire le nombre de photodétecteurs de référence, il est possible de placer un unique photodétecteur de référence devant l'un des côtés du support transparent 12, autres que le côté 34 devant lequel se trouve déjà le photodétecteur 32.

Ceci est schématiquement illustré par la figure 7 qui montre un photodétecteur de référence 47 placé devant le côté 37 du support transparent 12, opposé au côté 34. La mesure de référence est effectuée, par le photodétecteur 47, de la même façon que la mesure de fluorescence effectuée par le photodétecteur 32.

Par rapport aux précédentes configurations, la configuration de la figure 7 présente l'avantage d'être facile à mettre en oeuvre. En outre, elle ne nécessite qu'un seul photodétecteur pour effectuer la mesure de référence et évite ainsi le multiplexage physique.

Cependant, la puissance optique mesurée dans la configuration de la figure 7 est très faible. Cela impose l'utilisation d'un photodétecteur très sensible, du genre des tubes photomultiplicateurs ou des photodiodes à avalanche. Mais ces deux types de photodétecteurs sont coûteux.

On a par exemple effectué des mesures à l'aide de sources de lumière $24_1$, $24_2$, ... de type Luxeon® III Emitter Lambert LXHL-PM09, alimentées par un courant de 350 mA.

La lumière émise par ces sources a été mise en forme par des lentilles billes de 5 mm de diamètre $26_1$, $26_2$, ..., $30_1$, $30_2$, ... de type Melles Griot 06LMS005, à travers un filtre interférentiel 28 de type Omega® Optical 525AF45/25R.

L'excitance énergétique a été mesurée avec un photodétecteur amplifié de type Hamamatsu H8249-101. On a trouvé une valeur de 50 pW/mm² pour une chambre à circulation 16 remplie de gaz, et une valeur de 42 pW/mm² pour une chambre à circulation remplie de liquide.

Si l'on utilise une photodiode classique, ayant une détectivité de 0,2 A/W et une surface de 0,5 mm² pour mesurer le flux de lumière, on obtient un courant I de l'ordre de 5 pA.

Le bruit de Schottky $\sigma_S$, lié à la génération d'un tel courant par une photodiode, est donné par l'équation suivante :

$$\sigma_S = \sqrt{\frac{2 \cdot e \cdot I}{\Delta t}} \qquad (4)$$

Dans cette équation, $\sigma_S$ représente l'amplitude du bruit de Schottky (en ampères), e la charge de l'électron (1,6.10⁻¹⁹C) et $\Delta t$ le temps de mesure (en secondes).

Le bruit de Schottky est de l'ordre de 160 fA pour un temps de mesure de 50 µs, d'où une incertitude relative Inc% à trois écarts-types de 12%, d'après l'équation suivante :

$$Inc\% = \frac{3 \cdot \sqrt{\frac{2 \cdot e \cdot I}{\Delta t}}}{I} \cdot 100 \qquad (5)$$

Une telle incertitude relative est gênante pour des mesures de fluorescence à faible flux, ce qui est généralement le cas de toute mesure de fluorescence.

Typiquement, les incertitudes des mesures effectuées avec l'appareil qui est décrit dans le document [1] sont de l'ordre de 1% pour une durée d'interrogation de 300 ms pour chaque zone.

Corriger les variations temporelles du flux des sources par des mesures dont le bruit est, de façon relative, beaucoup plus important que le bruit du phénomène étudié, entraîne une dégradation des performances, ce qui est contraire à l'effet recherché.

Pour réduire ce bruit, il est possible (1) d'augmenter le temps de mesure, en intégrant le courant, ou (2) d'effectuer plusieurs mesures élémentaires moyennées. Toutefois, ces deux méthodes entraînent une augmentation de la durée de l'interrogation de chaque zone.

Par exemple, en négligeant les bruits propres au circuit électronique de mesure du courant de la photodiode, on montre que la méthode (2) impose de faire 14400 mesures élémentaires pour obtenir une incertitude relative de 0,1%, d'où un temps d'interrogation augmenté de 720 ms, avec un temps de mesure de 50 $\mu$s. Cela revient à tripler le temps d'interrogation.

Si l'on augmente la durée de la mesure $\Delta t$ à l'aide d'un circuit électronique adapté, on parvient théoriquement à une incertitude relative de 0,1% pour un temps de mesure de 350 ms, d'où une bande passante du circuit inférieure à 3 Hz. Dans ce dernier cas, la durée de l'interrogation est doublée.

## EXPOSÉ DE L'INVENTION

La présente invention a pour but de remédier aux inconvénients précédents.

Elle concerne un dispositif d'éclairage d'un objet, comportant une source de lumière, notamment un dispositif du genre de ceux qui ont été décrits plus haut, comportant une source de lumière destinée à éclairer un échantillon.

Ce dispositif comporte un moyen de prélèvement et de guidage de lumière.

Dans un mode de réalisation préféré,

- ce moyen permet de travailler avec un unique photodétecteur de référence, ce qui évite le multiplexage physique des mesures ;
- l'insertion du moyen dans le dispositif d'éclairage est simple et facile ; et
- ledit moyen permet d'obtenir, en amont du photodétecteur de référence, un flux de référence suffisamment élevé pour que l'incertitude de mesure obtenue soit faible par rapport à l'incertitude d'une mesure de fluorescence.

De façon précise, la présente invention concerne un dispositif d'éclairage d'au moins un objet, selon la revendication 1 ci-jointe.

De préférence, le moyen de prélèvement et de guidage de lumière est orienté perpendiculairement à l'axe d'éclairement, de façon à guider la lumière déviée perpendiculairement à l'axe d'éclairement.

Selon un mode de réalisation particulier du dispositif, objet de l'invention, la source de lumière est munie d'un système optique pour mettre en forme la lumière émise, ce système optique comprenant successivement, à partir de la source de lumière, une première lentille, un filtre de longueurs d'ondes et une deuxième lentille, et la lame à faces parallèles est disposée dans l'un des emplacements choisis parmi :

- un emplacement entre la source de lumière et la première lentille,
- un emplacement entre la première lentille et le filtre de longueurs d'ondes,
- un emplacement entre le filtre de longueurs d'ondes et la deuxième lentille, et
- un emplacement à la suite de la deuxième lentille.

Selon un mode de réalisation préféré de l'invention, la lame à faces parallèles comprend au moins une zone de diffusion de lumière (en anglais, *light scattering area*) qui est apte à dévier la lumière émise par la source de telle sorte que la lumière déviée est guidée par ladite lame à faces parallèles.

Selon un premier mode de réalisation particulier de l'invention, la zone de diffusion de lumière a la forme d'un anneau.

Selon un deuxième mode de réalisation particulier, la zone de diffusion de lumière a la forme d'un disque.

De préférence, la zone de diffusion de lumière est une zone rugueuse superficielle de la lame à faces parallèles.

La rugosité arithmétique de la zone rugueuse superficielle est de préférence supérieure aux longueurs d'ondes du domaine spectral auquel appartient la lumière émise par la source. Cette rugosité arithmétique est alors comprise dans l'intervalle allant de 100 nm à 50 $\mu$m.

La lame à faces parallèles peut comprendre deux zones de diffusion de lumière qui sont identiques ou, au contraire, différentes, et qui sont respectivement situées en regard l'une de l'autre, sur deux faces opposées de la lame à faces parallèles.

Selon un mode de réalisation préféré de l'invention, l'épaisseur de la lame à faces parallèles est comprise dans l'intervalle allant de 50 $\mu$m à 5 mm, de préférence de 500 $\mu$m à 2 mm.

La présente invention concerne aussi un procédé de correction d'un signal optique émis par un objet, comprenant les étapes suivantes :

- éclairer l'objet à l'aide d'une source lumineuse,
- détecter la lumière émise par l'objet sous l'effet de l'éclairement par la source lumineuse, à l'aide d'un premier photodétecteur,

selon la revendication 12 ci-jointe.

De préférence, le traitement comprend une correction du signal produit par le premier photodétecteur en fonction du signal détecté par le photodétecteur de référence.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- les figures 1 et 2 sont des vues schématiques de dispositifs connus, pour mesurer les variations du flux d'une source de lumière, et ont déjà été décrites,
- la figure 3A est une vue en coupe schématique, et la figure 3B une vue de dessus schématique, d'un appareil de détection et de dosage de substances biologiques ou chimiques, contenues dans un liquide ou un gaz, et ont déjà été décrites,
- les figures 4 à 7 illustrent schématiquement diverses techniques pour prélever une portion du flux de chaque source que comporte le dispositif des figures 3A et 3B, et ont déjà été décrites,
- la figure 8 montre la distribution angulaire de l'émission lumineuse d'une diode électroluminescente de type Luxeon® III Emitter Lambert LXHL-PM09,
- la figure 9A est une vue schématique d'un mode de réalisation particulier du dispositif, objet de l'invention, qui comporte une simple lame à faces parallèles en tant qu'organe de prélèvement de lumière, et dans lequel la lumière utilisée pour éclairer un objet est entourée par la lumière qui n'est pas utilisée pour l'éclairer,
- la figure 9B est une vue schématique d'un autre mode de réalisation particulier, dans lequel la lumière utilisée pour éclairer un objet entoure la lumière qui n'est pas utilisée pour l'éclairer,
- les figures 10 à 13 illustrent schématiquement divers emplacements possibles pour l'organe de prélèvement de lumière, dans un dispositif conforme à l'invention,
- la figure 14A est une vue schématique d'un mode de réalisation préféré du dispositif, objet de l'invention, dans lequel l'organe de prélèvement est une lame à faces parallèles comportant des zones de diffusion de lumière annulaires, et la figure 14B est une vue de dessus schématique de cet organe de prélèvement,
- la figure 15A est une vue schématique d'un autre mode de réalisation préféré, dans lequel l'organe de prélèvement est une lame à faces parallèles comprenant des zones de diffusion de lumière discoïdales, et la figure 15B est une vue de dessus schématique de cet organe de prélèvement,
- la figure 16 illustre schématiquement le principe de la déviation des rayons lumineux par un diffuseur du genre des zones de diffusion de lumière que comporte la lame des figures 15A et 15B,
- les figures 17A et 17B sont des vues schématiques d'une lame pourvue d'anneaux diffusants réalisés en vis-à-vis (figure 17A : anneaux symétriques - figure 17B : anneaux dissymétriques), et
- la figure 18 montre la correction appliquée à un signal lumineux d'excitation de zone d'interrogation, qui varie dans le temps.

## EXPOSÉ DÉTAILLÉ DE MODES DE RÉALISATION PARTICULIERS

Si l'on fait abstraction de certains lasers, l'émission des sources lumineuses est très peu directive : elle n'a pas lieu suivant un angle unique mais suivant différents angles. Et la distribution angulaire de l'émission lumineuse dépend du type de source considéré (par exemple source à filament, source à semiconducteur, ou source à arc) et du type d'optique associé à la source.

Par exemple, de nombreuses diodes électroluminescentes sont équipées d'une lentille qui est directement fixée au support dont ces diodes sont pourvues, afin de conditionner la lumière émise. Et certaines lampes à arc ou à filament sont équipées d'un miroir permettant de rediriger la lumière émise par de telles sources vers l'arrière de celles-ci, dans la direction opposée.

Dans tous les cas, le faisceau de sortie de telles sources est peu collimaté : les rayons lumineux composant ce faisceau ne sont pas parallèles les uns aux autres.

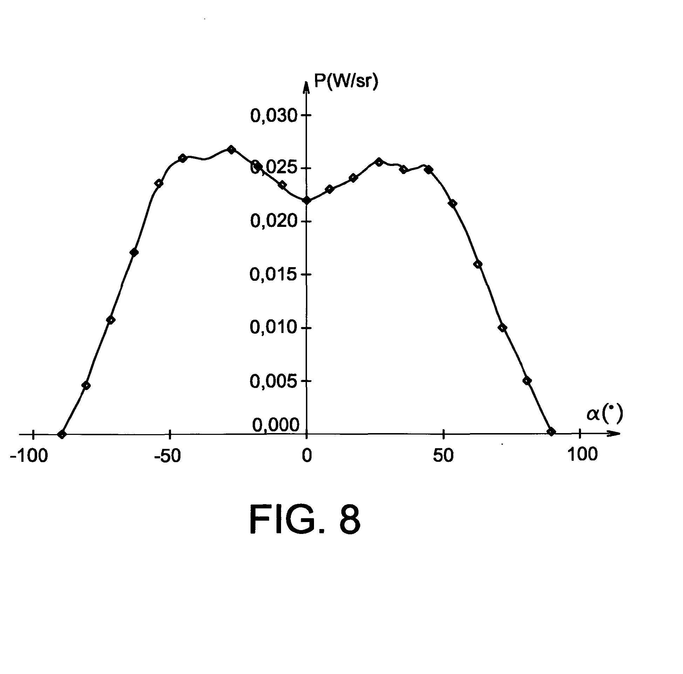

La figure 8 montre, à titre d'exemple, la distribution angulaire de l'émission lumineuse d'une diode électroluminescente de type Luxeon® III Emitter Lambert LXHL-PM09, c'est-à-dire les variations de la puissance optique P émise par cette diode (en watts par stéradian), en fonction de l'angle d'émission $\alpha$ (en degrés).

On va à présent donner divers exemples de l'invention. Dans ces exemples, l'invention est mise en oeuvre avec une source émettant un faisceau lumineux qui n'est pas collimaté : les rayons lumineux de ce faisceau ne sont pas parallèles les uns aux autres.

Toutefois, l'invention peut être mise en oeuvre avec une source primaire de lumière qui émet un faisceau lumineux collimaté : il suffit alors de rendre ce faisceau divergent à l'aide d'un moyen optique approprié, par exemple une lentille divergente, ou de mettre en oeuvre un diffuseur sur le chemin du faisceau collimaté.

On considère alors que l'invention est mise en oeuvre avec une source de lumière constituée par cette source primaire et ce moyen optique.

Les exemples de l'invention, qui sont donnés ci-après, concernent un dispositif d'éclairage d'un objet.

On a donc repris les mêmes références pour désigner les mêmes composants. Et l'objet à éclairer est un matériau capteur, exposé à un échantillon que l'on veut analyser.

Par « matériau capteur », on entend un matériau dont les propriétés optiques sont susceptibles d'évoluer lorsqu'il est mis au contact d'un analyte. Ainsi, lorsqu'un fluide, par exemple un gaz ou un liquide, s'écoule au contact du plot pourvu du matériau capteur, et que le fluide comporte un analyte auquel le matériau capteur est sensible, le plot, grâce au matériau capteur qu'il contient, subit une modification de ses propriétés optiques. Par « modification des propriétés optiques », on entend une émission d'une lumière de fluorescence, un changement de couleur, une modification de l'absorption.

Les matériaux capteurs peuvent être des polymères poreux ou des sol-gels, par exemple décrits dans la demande WO 2007/031657, et dans l'article de R. Dagnelie et al., "Méthodes de mesure du formaldéhyde dans l'atmosphère", Revue Air Pur N° 74, pages 14-21.

On notera que l'invention s'applique d'autant mieux que le plot comportant le matériau capteur est volumique et non pas surfacique.

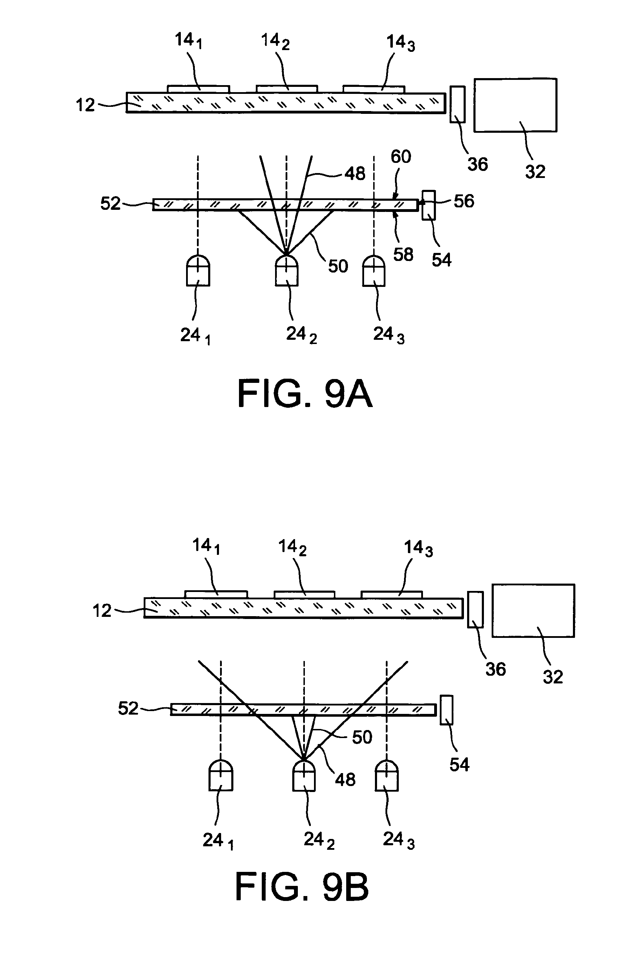

On a donc représenté, sur la figure 9A, de façon schématique et partielle, un mode de réalisation particulier du dispositif, objet de l'invention. Il comprend les sources lumineuses identiques $24_1$, $24_2$, $24_3$ pour éclairer respectivement les matériaux sensibles $14_1$, $14_2$, $14_3$.

Ces matériaux sont placés sur la lame à faces parallèles 12 qui est transparente à la lumière émise par les sources. Dans le cas particulier, et non limitatif, d'un matériau capteur fluorescent, lorsque ce dernier est exposé à un échantillon à analyser et reçoit la lumière de la source correspondante, il émet un rayonnement de fluorescence. Ce dernier se propage dans la lame 12 et il est détecté par le photodétecteur 32 après avoir été filtré par le filtre de longueurs d'ondes 34.

Dans ce qui suit, on s'intéresse simplement à la source $24_2$ et à l'objet correspondant $14_2$.

Cette source $24_2$ est telle que la lumière émise par elle comporte deux parties : une première partie 48, qui est centrale dans l'exemple, et une deuxième partie 50 qui est périphérique.

La première partie 48 est utilisée pour éclairer l'objet $14_2$ et la deuxième partie 50 n'est pas utilisée pour l'éclairer.

Conformément à l'invention, le dispositif de la figure 9A comprend en outre un organe 52 pour prélever au moins une portion de la deuxième partie 50 de la lumière émise par la source $24_2$. Autrement dit, cet organe est disposé en amont de l'objet. Par "en amont de l'objet", on entend qu'il est situé sur le chemin du faisceau optique généré par la source, avant que ce dernier n'atteigne l'objet. De cette façon, la lumière déviée par cet organe est essentiellement la lumière générée par la source. La fonction de cet organe de prélèvement est de dévier une partie de la lumière générée par la source.

Dans ce premier exemple, cet organe de prélèvement 52 est une simple lame à faces parallèles qui est transparente dans le domaine spectral auquel appartient la lumière émise par la source $24_2$.

A titre purement indicatif et nullement limitatif, ce domaine spectral va de 100 nm à 5 $\mu$m.

La lame 52 est placée entre la source $24_2$ et l'objet $14_2$ (entre l'ensemble des sources $24_1$, $24_2$, $24_3$ et la lame 12 dans l'exemple représenté), dans une région où se propage la deuxième partie 50 de la lumière émise par la source $24_2$.

La lame 52 est par exemple en verre. Elle est de préférence épaisse, avec une épaisseur comprise dans l'intervalle allant de 50 $\mu$m à 5 mm. Il est même préférable que cette épaisseur soit comprise dans l'intervalle allant de 500 $\mu$m à 2 mm.

Outre la déviation de la lumière produite par la source, la lame sert de guide de lumière, pour guider la portion de lumière préalablement déviée.

Le dispositif schématiquement représentaté sur la figure 9A comprend en outre un photodétecteur 54 pour capter au moins une portion de la lumière prélevée (ou déviée), puis guidée, par la lame à faces parallèles 52, fournir un signal représentatif du flux de la lumière émise par la source $14_2$, et permettre ainsi de mesurer les variations du flux (à l'aide de moyens appropriés, non représentés, prévus pour traiter ce signal).

Comme on le voit, le photodétecteur 54, ou capteur de référence, est placé en regard de l'un des côtés, ou bords, de la lame 52 (tandis que la partie centrale 48 de la lumière de la source $24_2$ traverse successivement la face inférieure 58 et la face supérieure 60 de la lame 52 pour aller éclairer l'objet $14_2$).

La figure 9B illustre schématiquement le cas où la source $14_2$ est telle que les deux parties de la lumière émise par elle sont inversées par rapport à la source qui a été décrite en faisant référence à la figure 9A : dans l'exemple de la figure 9B, la partie 48 de cette lumière, utilisée pour éclairer l'objet $14_2$, est périphérique, tandis que la partie 50, qui n'est pas utilisée pour éclairer l'objet, est centrale.

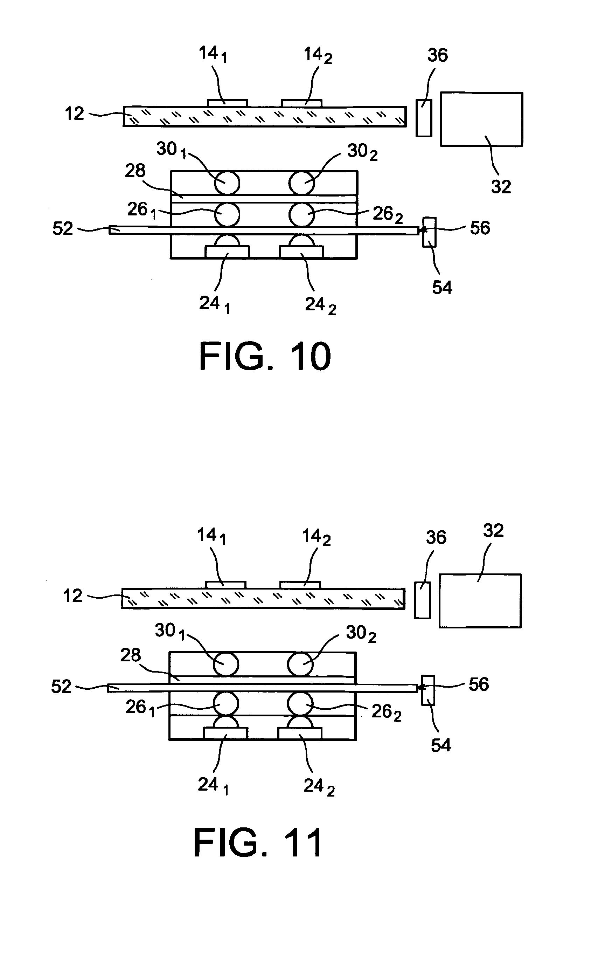

Les figures 10, 11, 12 et 13 illustrent schématiquement divers exemples de l'invention dans lesquels les sources de lumière, en particulier la source $24_2$, sont munies du système optique de mise en forme de lumière, dont il a été question dans la description des figures 3A et 3B.

On rappelle que ce système optique comprend successivement, à partir de l'ensemble des sources de lumière et pour chacune de celles-ci, en particulier la source $24_2$ : la première lentille $26_2$, le filtre de longueurs d'ondes 28 et la deuxième lentille $30_2$.

Dans les exemples schématiquement illustrés par les figures 10 à 13, la lame à faces parallèles 52 est disposée :

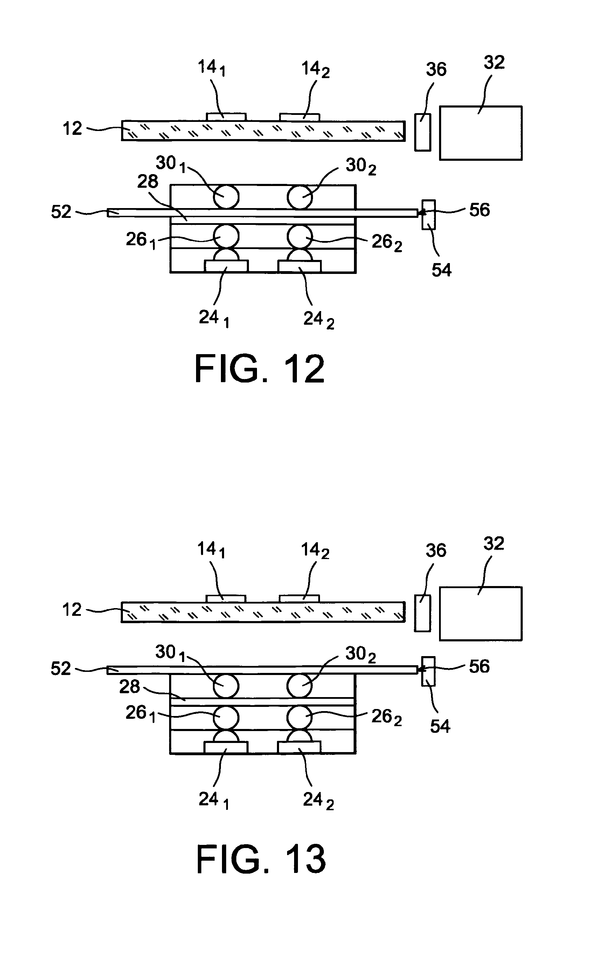

- soit entre l'ensemble des sources de lumière, en particulier la source $24_2$, et les premières lentilles, en particulier la lentille $26_2$ (figure 10),
- soit entre les premières lentilles et le filtre de longueurs d'ondes 28 (figure 11),
- soit entre le filtre de longueurs d'ondes 28 et les deuxièmes lentilles, en particulier la lentille $30_2$ (figure 12),
- soit à la suite des deuxièmes lentilles, en particulier de la lentille $30_2$, avant la lame 12 (figure 13).

On a montré expérimentalement que la position de la lame 52 est importante : comme on l'a vu, il faut placer cette lame 52 dans une région où la partie de lumière non utilisée 50 (figures 9A et 9B) se propage et peut donc être déviée, par un organe de prélèvement, puis être guidée en direction d'un photodétecteur.

Pour les configurations représentées sur ces figures 10 et 11, les incertitudes relatives pour une mesure, calculées à partir de l'équation (5), valent respectivement 0,3% et 2,72%.

Ces résultats montrent que le choix de la position de l'organe de prélèvement est important : la disposition d'une lame de verre, montrée par la figure 10, permet de collecter la lumière émise par les sources $24_1$, $24_2$ en deçà du cône de collection des lentilles $26_1$, $26_2$ ; alors que dans la configuration illustrée par la figure 11, cette lumière n'est pas transmise par les lentilles $26_1$, $26_2$ et elle est perdue pour les mesures.

Le mode de réalisation particulier représenté sur la figure 12 permet de tenir compte des dérives spectrales des sources de lumière.

Toutefois, dans le cas de la figure 12, le flux lumineux est plus faible que le flux mesuré dans la configuration de la figure 11 car une fraction importante de la lumière est bloquée par le filtre 28. L'incertitude de mesure est alors plus importante et la correction des variations de l'intensité de l'éclairement produit par une source est plus difficile à réaliser.

Par ailleurs, dans le cas de la figure 12, le photodétecteur 54 peut être un simple photodétecteur, ou un photodétecteur muni d'un filtre, ou un capteur de couleurs, ou même un spectrophotomètre.

Le mode de réalisation particulier qui est représenté sur la figure 13 permet également de tenir compte des dérives spectrales des sources de lumière.

On considère, ci-après, un mode de réalisation préféré de l'invention, qui permet de coupler plus de lumière dans la lame à faces parallèles. On a vu, en effet, que plus la quantité de lumière couplée dans cette lame à faces parallèles est importante, plus la précision de mesure est grande.

Ce mode de réalisation préféré permet, entre autres, de placer l'organe de prélèvement comme le montre la figure 10 : en amont du filtre 28 et des lentilles $30_1$, $30_2$.

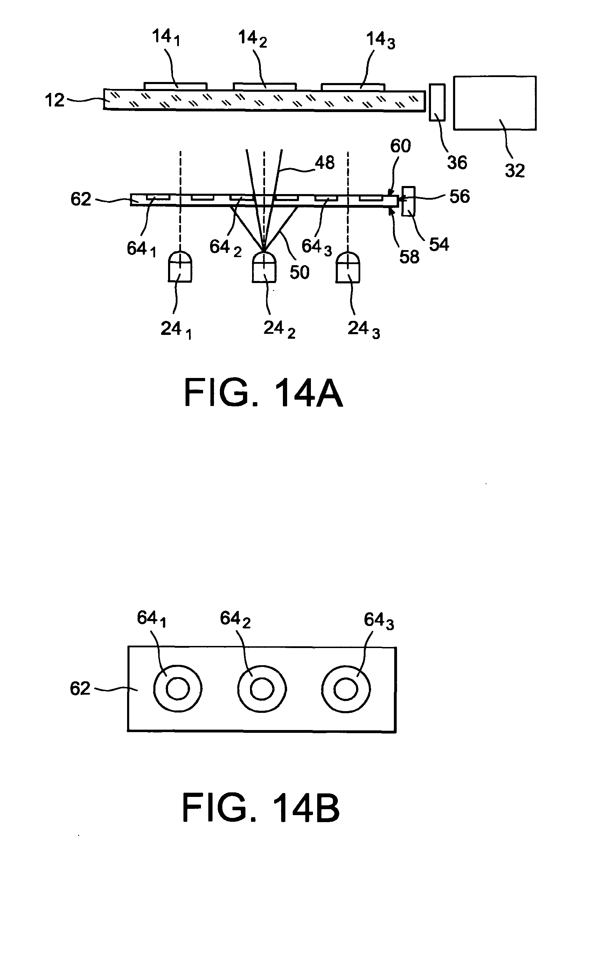

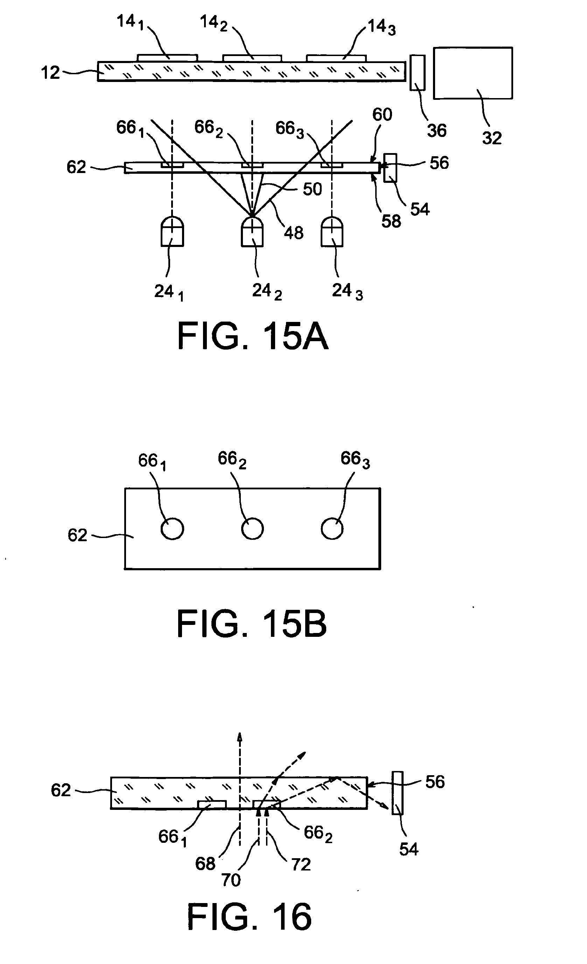

De façon avantageuse, selon l'ensemble des modes de réalisation, pour augmenter la fraction de lumière couplée dans la lame, on utilise, dans le dispositif d'éclairage, une lame à faces parallèles 62 (figures 14A, 14B, 15A, 15B) comprenant, pour chaque source, une zone de diffusion de lumière, ou diffuseur de lumière, apte à dévier une partie de la lumière qui est émise par la source, dans le guide de lumière. On peut par exemple dévier une partie de la lumière qui n'est pas utilisée pour éclairer l'objet.

Dans les exemples qui suivent, cette zone de diffusion de lumière, également appelée « diffuseur », est une surface diffusante.

L'exemple illustré par la figure 14A se déduit de l'exemple illustré par la figure 9A en remplaçant la lame 52 par la lame 62 que l'on voit sur la figure 14A. Et la figure 14B est une vue de dessus de cette lame 62.

De même, l'exemple illustré par la figure 15A se déduit de l'exemple illustré par la figure 9B en remplaçant la lame 52 par la lame 62 que l'on voit sur la figure 15A. Et la figure 15B est une vue de dessus de cette lame 62.

Dans l'exemple schématiquement illustré par les figures 14A et 14B, la deuxième partie 50 de la lumière émise par une source telle que la source $24_2$ entoure la première partie 48, et chaque surface diffusante a la forme d'un anneau. Les surfaces diffusantes annulaires, associées aux sources $24_1$, $24_2$, $24_3$, ont respectivement les références $64_1$, $64_2$, $64_3$.

Dans l'exemple schématiquement illustré par les figures 15A et 15B, la première partie 48 de la lumière émise par une source telle que la source $24_2$ entoure la deuxième partie 50, et chaque surface diffusante a la forme d'un disque. Les surfaces diffusantes en forme de disque, associées aux sources $24_1$, $24_2$, $24_3$, ont respectivement les références $66_1$, $66_2$, $66_3$.

Typiquement, la surface d'un diffuseur peut être comprise entre 0,5 et 10 fois la surface formée, sur la lame, par le faisceau incident à l'objet éclairé, et de préférence entre 0,5 et 5 fois.

Le périmètre externe d'un diffuseur peut être circulaire ou polyédrique. De même, lorsque le diffuseur est un anneau, le périmètre interne de l'anneau peut être circulaire ou polyédrique.

De préférence, quel que soit le mode de réalisation, les diffuseurs sont constitués par des zones rugueuses superficielles du guide de lumière, dont la rugosité arithmétique est comprise dans l'intervalle allant de 100 nm à 50 μm. Cela permet de privilégier la diffusion élastique de la lumière par rapport au phénomène de diffraction.

Autrement dit, avec une telle rugosité, la déviation de la lumière dans le guide s'effectue principalement par diffusion élastique. Cela constitue une solution plus simple par rapport à l'utilisation de réseaux de diffraction. Ainsi, par « diffuseur », on entend un élément apte à dévier, par diffusion, une lumière qu'il reçoit.

La figure 16 illustre schématiquement le principe de la déviation des rayons lumineux par un diffuseur du genre des surfaces diffusantes $66_1$, $66_2$ de la lame de verre 62 des figures 15A et 15B.

Les rayons lumineux sont émis par la source (non représentée) qui est associée à ce diffuseur.

Après déviation par un diffuseur, une portion de la lumière est piégée dans la lame de verre 62 et s'y propage par réflexion totale interne si son incidence, dans la lame, est supérieure à l'angle limite de réflexion totale défini dans ce qui suit. Autrement dit, la lame agit en tant que guide de lumière, ou guide d'onde.

Alors, cette portion de lumière émerge par le côté 56 de la lame 62 et elle est captée par le photodétecteur 54.

Par exemple, le rayon lumineux 68 ne rencontre aucun diffuseur et sa direction n'est pas modifiée ; il traverse la lame 62 en sortant par la face opposée à la face d'entrée.

Le rayon lumineux 70 rencontre le diffuseur $62_2$ mais sa réfraction est insuffisante pour que son angle, après la face d'entrée, soit supérieur à l'angle limite de réflexion totale $\theta_C$. Ainsi, le rayon lumineux 70 traverse également la lame 62 en sortant par la face opposée à la face d'entrée.

Rappelons que l'angle $\theta_C$ est défini par la formule suivante :

$$\theta_C = \arcsin\ (n_2/n_1)$$

où $n_1$ désigne l'indice de réfraction de la lame et $n_2$ l'indice de réfraction du milieu environnant cette lame.

Le rayon lumineux 72 rencontre le diffuseur $62_2$ et sa réfraction est suffisante pour que son angle, après la face d'entrée, soit supérieur à l'angle limite de réflexion totale $\theta_C$. Ce rayon 72 est couplé dans la lame 62 et émerge par le côté 56 de celle-ci. Il est alors capté par le photodétecteur 54 qui est disposé en regard de ce côté 56.

La forme et les paramètres géométriques de chaque surface diffusante sont définis selon, d'une part, la directivité de la source lumineuse associée et, d'autre part, la quantité de lumière couplée, nécessaire pour réaliser une mesure de référence précise.

La quantité de lumière qui est couplée grâce à une surface diffusante est également fonction de la rugosité de cette surface. Cette rugosité, exprimée comme la rugosité arithmétique, notée Ra, dépend de la technique de fabrication de la surface diffusante.

Par exemple, la rugosité d'une surface de verre, de type lame de microscope, est environ égale à 2 nm ; elle est très inférieure aux longueurs d'ondes des lumières utilisables dans un exemple de l'invention pour éclairer les zones d'interrogation dont il a été question plus haut ; et une telle surface ne diffuse pas assez de lumière pour que les mesures soient exploitables.

Par exemple, dans le domaine visible, avec une longueur d'onde λ de 500 nm, une rugosité Ra de 2 nm, et une lame en verre de borosilicate, ayant un indice de réfraction $n_1$ égal à 1,523 et placée dans l'air (dont l'indice de réfraction $n_2$ est égal à 1), on trouve que l'intensité totale $I_c$ couplée dans la lame est égale à 0,01% de l'intensité $I_o$ de la lumière incidente. A ce sujet, on se reportera au document suivant :

**[2]** J.M. Elson et al., "Relationship of the total integrated scattering from multilayercoated optics to angle of incidence, polarization, correlation-length, and roughness crosscorrelationproperties", Appl.Opt., 22, 3207 (1983)).

Pour déterminer $I_c$, on utilise les formules suivantes :

$$R = \left[\frac{n_1 - n_2}{n_1 + n_2}\right]^2 = 0,04$$

$$D = R\left[\frac{4\pi\,Ra}{\lambda}\right]^2 \approx 10^{-4}$$

$$I_C = D \times I_0$$

où R désigne le facteur de réflexion et D le facteur de diffusion.

Avantageusement, la surface est donc rendue diffusante en augmentant la rugosité Ra, selon la valeur souhaitée, par différentes techniques qui sont exposées plus loin, de manière à obtenir une zone rugueuse superficielle dont la rugosité Ra est supérieure aux longueurs d'ondes du domaine spectral auquel appartient la lumière émise par la source correspondante.

Pour être efficace, il est préférable que cette rugosité Ra soit comprise entre 100 nm et 50 $\mu$m.

Par exemple, on peut réaliser, par microbillage, des diffuseurs en forme d' anneaux du genre de ceux que montre la figure 14B. Alors, en plaçant la lame munie de ces anneaux diffusants comme le montre la figure 10, on obtient, du côté 56 de la lame, un éclairement égal à 9,3 W/m$^2$ ; alors que l'éclairement sans surface diffusante, pour une lame à la même position, est égal à 0,064 W/m$^2$.

Le gain de flux mesurable est alors de l'ordre de 150. Cela conduit à une incertitude de mesure de 0,02% au lieu de 0,30%, en gardant les mêmes hypothèses que précédemment.

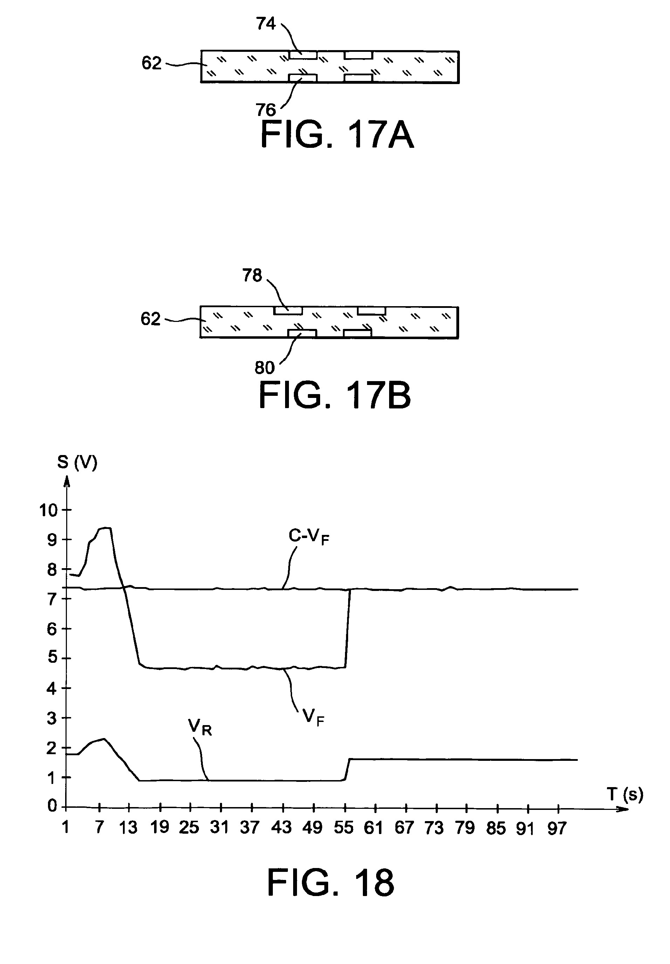

Pour augmenter encore la quantité de lumière couplée, il est possible de réaliser deux diffuseurs en vis-à-vis, qui sont soit symétriques (figure 17A), soit dissymétriques (figure 17B).

Plus précisément, dans l'exemple qui est schématiquement et partiellement illustré par la figure 17A, la lame à faces parallèles 62 comprend, pour chaque source de lumière, deux surfaces diffusantes annulaires 74, 76 qui sont identiques et sont respectivement situées en regard l'une de l'autre, sur deux faces opposées de la lame à faces parallèles. Ainsi, la lame à face parallèle agit d'une part en tant qu'organe de prélèvement de la lumière émise par la source, d'autre part en tant que guide de lumière de la lumière ainsi prélevée.

Et, dans l'exemple de l'invention qui est schématiquement et partiellement illustré par la figure 17B, la lame à faces parallèles 62 comprend, pour chaque source de lumière, deux surfaces diffusantes annulaires 78, 80 qui sont différentes et sont respectivement situées en regard l'une de l'autre, sur deux faces opposées de la lame à faces parallèles.

Le choix entre ces deux configurations est fait selon les résultats attendus, le type de source utilisé pour l'éclairement et la mise en forme du faisceau lumineux émis par cette source.

La figure 18 est une illustration de résultats expérimentaux que l'on a obtenus. Plus précisément, elle montre la correction appliquée à un signal lumineux d'excitation de zone d'interrogation, qui varie dans le temps. Les signaux de noir ne sont pas représentés.

Sur la figure 18, le temps T (en secondes) est porté en abscisse et les signaux mesurés S (en volts) sont portés en ordonnée.

Cette figure permet de comparer une mesure de fluorescence non corrigée, obtenue avec le photodétecteur 32 (figure 7), à une mesure de fluorescence encore obtenue avec ce photodétecteur, mais corrigée à l'aide du photodétecteur 54 et de l'organe de prélèvement que l'on voit sur la figure 14A.

Une procédure pour effectuer cette correction est donnée ci-après.

Lors de la lecture d'un matériau sensible, on effectue quatre mesures, ou quatre mesures moyennes, des signaux respectivement issus du capteur de fluorescence (photodétecteur 32) et du capteur de référence (photodétecteur 54) :

- mesure du signal de noir du capteur de référence (les sources de lumière sont éteintes) : OR,
- mesure du signal de noir du capteur de fluorescence (les sources de lumière sont éteintes) : $O_F$,
- mesure du signal fourni par le capteur de référence : $V_R$,
- mesure du signal fouri par le capteur de fluorescence : $V_F$.

On décrit, ci-après, la méthode de correction utilisée.

Etape 1    - En début d'expérience, on effectue la lecture du matériau sensible considéré ; on obtient quatre mesures : $O_{R0}$, $V_{R0}$, $O_{F0}$, $V_{F0}$ ; - on calcule alors un facteur de correction Cf ; il est donné par la formule suivante :

$$Cf = \frac{V_{F0} - O_{F0}}{V_{R0} - O_{R0}} \, .$$

Etape 2      - Lors d'un cycle d'interrogation, pour chaque matériau sensible on mesure les signaux OR, $V_R$, $O_F$, $V_F$.

Etape 3      - La mesure de fluorescence corrigée *C_VF* est donnée par la formule suivante :

$$C\_V_F = Cf \times (V_R - O_R) - O_F$$

Cette procédure est appliquée aux signaux représentés sur la figure 18.

Sur le photodétecteur 32, on mesure un signal brut qui présente une forte variation d'amplitude. Ce photodétecteur 32 permet de mesurer les signaux $O_F$ et $V_F$.

On mesure simultanément un signal de référence provenant de rayons lumineux déviés par un diffuseur annulaire tel que le diffuseur $64_1$ de la figure 14A. L'intensité de ce signal est mesurée par le capteur de référence 54 qui permet d'acquérir les signaux de référence OR et $V_R$.

En appliquant la méthode décrite ci-dessus, on obtient le signal de mesure corrigé C_VF. Ce signal est corrigé à l'aide d'une comparaison de la mesure détectée par le photodétecteur 32 avec le signal détecté par le photodétecteur de référence, cette comparaison apparaissant ici sous la forme d'un rapport. Naturellement, toute autre combinaison arithmétique exprimant une comparaison entre deux signaux (notamment soustraction) pourrait être utilisée, l'idée générale étant de comparer l'intensité du signal mesuré avec l'intensité du signal incident à l'échantillon.

Revenons sur l'invention, dans lequel on utilise une simple lame à faces parallèles, placée dans une région permettant de récupérer une portion suffisante de la lumière qui n'est pas utilisée pour éclairer l'objet étudié.

La lame doit être faite d'un matériau qui est transparent dans le domaine spectral de la source de lumière. Pour le domaine visible, le matériau peut être, par exemple, du verre, de la silice, ou un matériau synthétique (par exemple PMMA ou polystyrène).

S'il est nécessaire de limiter la lumière à un intervalle spectral réduit, la lame peut être placée après un filtre de longueurs d'ondes, comme le montre la figure 12.

Pour augmenter la quantité de lumière couplée dans la lame, et si les contraintes de sélection de l'intervalle spectral le permettent, le filtre peut être placé entre la source (ou les sources dans le cas de la figure 12) et la lame de prélèvement 62.

D'une manière générale, toutes les combinaisons de dispositions relatives des sources, des lentilles, du filtre (voire des filtres) et de la lame de prélèvement sont envisageables selon les sources et les lentilles utilisées et selon les applications envisagées. Les exemples donnés ne sont donc pas restrictifs.

Revenons à présent sur le mode de réalisation préféré de l'invention, dans lequel on utilise une surface diffusante pour intercepter la partie de la lumière qui n'est pas utilisée pour éclairer l'objet.

De nombreuses méthodes existent pour réaliser une surface diffusante à partir d'une surface lisse.

Il est possible de dépolir cette surface lisse par une attaque chimique, par exemple au moyen d'acide fluorhydrique, de bi-fluorure d'ammonium ou d'acide chlorhydrique. L'action de ces acides peut-être localisée, en déposant, sur la lame dont on veut dépolir la surface, des gouttes de tels acides aux endroits où l'on souhaite créer des zones dépolies.

Un fraisage à l'aide d'une fraise en diamant permet aussi d'obtenir une surface diffusante, de même qu'une érosion aux ultrasons, à l'aide d'un outil dont la forme correspond au motif recherché.

On peut également dépolir la surface en utilisant un liquide, contenant des particules en suspension, et un outil de forme adaptée.

Il est aussi possible de réaliser un microbillage de la surface après avoir protégé les parties de celle-ci que l'on ne veut pas dépolir.

Un exemple de cette dernière méthode est décrit ci-après.

On réalise tout d'abord un masque pour protéger les régions que l'on ne souhaite pas dépolir. Ce masque peut-être réalisé à l'aide d'un film adhésif (par exemple de type Arcare 90106, commercialisé par la société Adhesive Research) qui sera retiré après le microbillage. La découpe peut être réalisée avec un robot spécialisé (par exemple de type Craft Robo Pro E5000, commercialisé par la société Graphtec).

Le masque est ensuite positionné sur la lame de verre avec laquelle on veut former l'organe de prélèvement.

Le microbillage peut être effectué avec une sableuse d'atelier et de petites billes de verres. Le diamètre des billes et les conditions de projection (pression du jet de sable, temps d'exposition) définissent la rugosité que l'on obtiendra pour la surface. Après la projection, le masque est retiré et la lame est nettoyée à l'aide d'un solvant adapté, par exemple l'éthanol, l'acétone ou l'isopropanol.

On peut également faire adhérer des films diffusants et transparents sur les zones de la surface où l'on veut former les diffuseurs, par exemple des films faits d'un polyester tel que le polyéthylène téréphtalate ou PET, qui sont semi-transparents et laiteux.

De nombreux diffuseurs, mis au point pour l'éclairage, sont également commercialement disponibles.

On peut également obtenir une déviation des rayons lumineux dans les régions choisies de la lame 62, par l'intermédiaire de micro-prismes ou de lentilles de Fresnel, réalisés par embossage dans ces régions, pour une lame transparente qui est faite d'une matière synthétique telle que le PMMA ou le polystyrène.

En variante, on peut faire adhérer, à la lame, un film comportant des microprismes et une structure de lentille de Fresnel. De nombreux produits de ce genre, mis au point pour l'éclairage, sont commercialement disponibles.

Bien entendu, la présente invention ne s'applique pas qu'à un dispositif du genre de celui qui est décrit dans le document [1].

De plus, elle n'est pas limitée à la mesure des variations de flux d'une source de lumière.

La présente invention s'applique à tout dispositif d'éclairage d'un objet, dispositif dont on souhaite prélever une portion de la lumière émise, quelle que soit l'utilisation envisagée pour cette portion.

Et l'objet à éclairer ne se limite pas à un échantillon que l'on veut analyser : l'invention s'applique à tout domaine dans lequel on a besoin d'éclairer un objet quel qu'il soit, voire un être vivant ou une scène.

## Revendications

**1.** Dispositif d'éclairage d'au moins un objet ($14_1$, $14_2$, $14_3$), ce dispositif comprenant au moins une source de lumière ($24_1$, $24_2$, $24_3$) émettant une lumière d'éclairement autour d'un axe d'éclairement, pour éclairer ledit objet, le dispositif comprenant en outre un moyen de prélèvement et de guidage de lumière ($52$ ; $62$, $64_1$, $64_2$, $64_3$ ; $62$, $66_1$, $66_2$, $66_3$ ; $62$, $74$, $76$ ; $62$, $78$, $80$), disposé en amont de l'objet, ce moyen de prélèvement et de guidage de lumière étant apte à dévier et à guider une partie de ladite lumière d'éclairement, le dispositif comportant :

- un premier photodétecteur (32) pour recevoir la lumière émise par l'objet sous l'effet de l'éclairement,
- un photodétecteur de référence (54) pour recevoir la lumière guidée par le moyen de prélèvement et de guidage de lumière, et
- un moyen pour traiter le signal fourni par le premier photodétecteur (32) à l'aide du signal fourni par le photodétecteur de référence (54),

**caractérisé en ce que** le moyen de prélèvement et de guidage de lumière comporte une lame à faces parallèles (52, 62) qui est transparente dans le domaine spectral de la lumière d'éclairement.

**2.** Dispositif selon la revendication 1, dans lequel le moyen de prélèvement et de guidage de lumière est orienté perpendiculairement à l'axe d'éclairement, de façon à guider la lumière déviée perpendiculairement à l'axe d'éclairement.

**3.** Dispositif selon la revendication 1, dans lequel la source de lumière ($24_2$) est munie d'un système optique pour mettre en forme la lumière émise, ce système optique comprenant successivement, à partir de la source de lumière, une première lentille ($26_2$), un filtre de longueurs d'ondes (28) et une deuxième lentille ($30_2$), et la lame à faces parallèles (52, 62) est disposée dans l'un des emplacements choisis parmi :

- un emplacement entre la source de lumière ($24_2$) et la première lentille ($26_2$),
- un emplacement entre la première lentille ($26_2$) et le filtre de longueurs d'ondes (28),
- un emplacement entre le filtre de longueurs d'ondes (28) et la deuxième lentille ($30_2$), et
- un emplacement à la suite de la deuxième lentille ($30_2$).

**4.** Dispositif selon l'une quelconque des revendications 1 et 3, dans lequel la lame à faces parallèles (62) comprend au moins une zone de diffusion de lumière ($64_2$, $66_2$, 74-76, 78-80) qui est apte à dévier la lumière émise par la source ($24_2$) de telle sorte que la lumière déviée est guidée par ladite lame à faces parallèles (62).

**5.** Dispositif selon la revendication 4, dans lequel la zone de diffusion de lumière a la forme d'un anneau ($64_2$).

**6.** Dispositif selon la revendication 4, dans lequel la zone de diffusion de lumière a la forme d'un disque ($66_2$).

**7.** Dispositif selon l'une quelconque des revendications 4 à 6, dans lequel la zone de diffusion de lumière est une zone rugueuse superficielle ($64_2$, $66_2$) de la lame à faces parallèles (62).

**8.** Dispositif selon la revendication 7, dans lequel la rugosité arithmétique de la zone rugueuse superficielle est supérieure aux longueurs d'ondes du domaine spectral auquel appartient la lumière émise par la source ($24_2$), et cette

rugosité arithmétique est comprise dans l'intervalle allant de 100 nm à 50 μm.

9.  Dispositif selon l'une quelconque des revendications 4 à 7, dans lequel la lame à faces parallèles (62) comprend deux zones de diffusion de lumière (74, 76) qui sont identiques et sont respectivement situées en regard l'une de l'autre, sur deux faces opposées de la lame à faces parallèles.

10. Dispositif selon l'une quelconque des revendications 4 à 7, dans lequel la lame à faces parallèles (62) comprend deux zones de diffusion de lumière (78, 80) qui sont différentes et sont respectivement situées en regard l'une de l'autre, sur deux faces opposées de la lame à faces parallèles.

11. Dispositif selon l'une quelconque des revendications 1 et 3 à 10, dans lequel l'épaisseur de la lame à faces parallèles (52, 62) est comprise dans l'intervalle allant de 50 μm à 5 mm, de préférence de 500 μm à 2 mm.

12. Procédé de correction d'un signal optique émis par un objet ($14_1$, $14_2$, $14_3$), comprenant les étapes suivantes :

    - éclairer l'objet à l'aide d'une source lumineuse ($24_1$, $24_2$, $24_3$),
    - détecter la lumière émise par l'objet sous l'effet de l'éclairement par la source lumineuse, à l'aide d'un premier photodétecteur (32),
    - dévier la lumière émise par la source, en amont de l'objet éclairé, à l'aide d'un guide de lumière, ce dernier guidant la lumière déviée vers un photodétecteur de référence (54) et comportant une lame à faces prallèles (52, 62) qui est transparente dans le domaine spectral de la lumière d'éclairement, et
    - traiter le signal produit par le premier photodétecteur en fonction du signal détecté par le photodétecteur de référence.

13. Procédé selon la revendication 12, dans lequel le traitement comprend une correction du signal produit par le premier photodétecteur (32) en fonction du signal détecté par le photodétecteur de référence (54).

**Patentansprüche**

1.  Vorrichtung zur Beleuchtung wenigstens eines Objekts ($14_1$, $14_2$, $14_3$), wobei diese Vorrichtung wenigstens eine ein Beleuchtungslicht abstrahlende Lichtquelle ($24_1$, $24_2$, $24_3$) umfasst, die ein Beleuchtungslicht um eine Beleuchtungsachse herum abstrahlt, um das genannte Objekt zu beleuchten, wobei die Vorrichtung außerdem eine dem Objekt vorgeordnete Lichtentnahme- und -leiteinrichtung ($52$ ; $62$, $64_1$ ; $64_2$ ; $64_3$ ; $62$ ; $66_1$ ; $66_2$ ; $66_3$ ; $62$, $74$, $76$ ; $62$, $78$, $80$) umfasst, wobei diese Lichtentnahme- und -leiteinrichtung fähig ist, einen Teil des genannten Beleuchtungslichts abzulenken und zu leiten, und die Vorrichtung dabei umfasst :

    - einen ersten Fotodetektor (32), um das von dem Objekt unter der Wirkung der Beleuchtung abgestrahlte Licht zu empfangen,
    - einen Referenz-Fotodetektor (54), um das durch die Lichtentnahme- und -leiteinrichtung geleitete Licht zu empfangen, und
    - eine Einrichtung zur Verarbeitung des durch den ersten Fotodetektor (32) gelieferten Signals mit Hilfe des durch den Referenz-Fotodetektor (54) gelieferten Signals,

    **dadurch gekennzeichnet, dass** die Lichtentnahme- und -leiteinrichtung eine parallelflächige Platte (52, 62) umfasst, die im Spektralbereich des Beleuchtungslichts transparent ist.

2.  Vorrichtung nach Anspruch 1. bei der die Lichtentnahme- und -leiteinrichtung senkrecht zur Beleuchtungsachse angeordnet ist, um das senkrecht zu der Beleuchtungsachse abgelenkte Licht zu leiten.

3.  Vorrichtung nach Anspruch 1, bei der die Lichtquelle ($24_2$) ein optisches System umfasst, um das abgestrahlte Licht zu formen, wobei dieses optische System, ausgehend von der Lichtquelle, nacheinander eine erste Linse ($26_2$), ein Wellenlängenfilter (28) und eine zweite Linse ($30_2$) umfasst, und die parallelflächige Platte (52, 62) sich dabei an einem der folgenden Plätze befindet :

    - einem Platz zwischen der Lichtquelle ($24_2$) und der ersten Linse ($26_2$),
    - einem Platz zwischen der ersten Linse ($26_2$) und dem Wellenlängenfilter (28),
    - einem Platz zwischen dem Wellenlängenfilter (28) und der zweiten Linse ($30_2$), und

- einem der zweiten Linse ($30_2$) nachgeordneten Platz.

4.  Vorrichtung nach einem der Ansprüche 1 und 3, bei der die parallelflächige Platte (62) wenigstens eine Lichtdiffusionszone ($64_2$, $66_2$, 74-76, 78-80) umfasst, die fähig ist, das durch die Quelle ($24_2$) abgestrahlte Licht so abzulenken, dass das abgelenkte Licht durch die genannte parallelflächige Platte (62) geleitet wird.

5.  Vorrichtung nach Anspruch 4, bei der die Lichtdiffusionszone die Form eines Rings hat ($64_2$).

6.  Vorrichtung nach Anspruch 4, bei der die Lichtdiffusionszone die Form einer Scheibe hat ($66_2$).

7.  Vorrichtung nach einem der Ansprüche 4 bis 6, bei der die Lichtdiffusionszone eine raue Oberflächenzone ($64_2$, $66_2$) der parallelflächigen Platte (62) ist.

8.  Vorrichtung nach Anspruch 7, bei der die arithmetische Rauhigkeit der rauen Oberflächenzone größer ist als die Wellenlänge des Spektralbereichs, zu dem das durch die Quelle ($24_2$) abgestrahlte Licht gehört, und diese arithmetische Rauhigkeit in dem von 100 nm bis 50 $\mu$m gehenden Intervall enthalten ist.

9.  Vorrichtung nach einem der Ansprüche 4 bis 7, bei dem die parallelflächige Platte (62) zwei Lichtdiffusionszonen (74, 76) umfasst, die gleich sind und sich jeweils gegenüberstehen, auf zwei entgegengesetzten Seiten der parallelflächigen Platte.

10. Vorrichtung nach einem der Ansprüche 4 bis 7, bei dem die parallelflächige Platte (62) zwei Lichtdiffusionszonen (78, 80) umfasst, die verschieden sind und sich jeweils gegenüberstehen, auf zwei entgegengesetzten Seiten der parallelflächigen Platte.

11. Vorrichtung nach einem der Ansprüche 1 und 3 bis 10, bei dem die Dicke der parallelflächigen Platte (52, 62) in dem Intervall enthalten ist, das von 50 $\mu$m bis 5 mm, vorzugsweise von 500 $\mu$m bis 2 mm geht.

12. Verfahren zur Korrektur eines durch ein Objekt ($14_1$, $14_2$, $14_3$) abgestrahlten bzw. gesendeten optischen Signals, die folgenden Schritte umfassend :

    - Beleuchten des Objekts mit Hilfe einer Lichtquelle ($24_1$, $24_2$, $24_3$),
    - Detektieren des durch das Objekt unter der Wirkung der Beleuchtung durch die Lichtquelle abgestrahlten Lichts mit Hilfe eines ersten Fotodetektors (32),
    - Ablenken des durch die Quelle abgestrahlten Lichts mit Hilfe eines dem beleuchteten Objekt vorgeordneten Lichtleiters, wobei dieser letztere das abgelenkte Licht zu einem Referenz-Fotodetektor (54) leitet und eine parallelflächige Platte (52, 62) darstellt, die in dem Spektralbereich des Beleuchtungslichts transparent ist, und
    - Verarbeiten des durch den ersten Fotodetektor erzeugten Signals in Abhängigkeit von dem durch den Referenz-Fotodetektor detektierten Signal.

13. Verfahren nach Anspruch 12, bei dem die Verarbeitung eine Korrektur des durch den ersten Fotodetektor (32) erzeugten Signals in Abhängigkeit von dem durch den Referenz-Fotodetektor (54) detektierten Signal umfasst.

**Claims**

1.  Device for lighting at least one object ($14_1$, $14_2$, $14_3$), said device comprising at least one light source ($24_1$, $24_2$, $24_3$) emitting an illuminating light around a illumination axis, for lighting said object, the device moreover comprising a means for sampling and guiding light (52 ; 62, $64_1$, $64_2$, $64_3$ ; 62, $66_1$, $66_2$, $66_3$ ; 62, 74, 76 ; 62, 78, 80), arranged upstream of the object, said means for sampling and guiding light being able to deviate and guide a part of said illuminating light, and also comprising:

    - a first photodetector (32) for receiving the light emitted by the object under the effect of the illumination,
    - a reference photodetector (54) for receiving the light guided by the means for sampling and guiding light, and
    - a means for processing the signal supplied by the first photodetector (32) by means of the signal supplied by the reference photodetector (54),

    **characterized in that** the means for sampling and guiding light comprises a plate with parallel faces (52, 62) which is transparent in the spectral domain of the illuminating light.

2. Device according to claim 1, wherein the means for sampling and guiding light is oriented perpendicularly to the lighting axis, so as to guide the light deviated perpendicularly to the lighting axis.

3. Device according to claim 1, wherein the light source ($24_2$) is provided with an optical system for shaping the emitted light, said optical system comprising successively, from the light source, a first lens ($26_2$), a wavelength filter (28) and a second lens ($30_2$), and the plate with parallel faces (52, 62) is arranged in one of the places chosen among:

- a place between the light source ($24_2$) and the first lens ($26_2$),
- a place between the first lens ($26_2$) and the wavelength filter (28),
- a place between the wavelength filter (28) and the second lens ($30_2$), and
- a place behind the second lens ($30_2$).

4. Device according to any of claims 1 and 3, wherein the plate with parallel faces (62) comprises at least one light scattering area ($64_2$, $66_2$, 74-76, 78-80) which is able to deviate the light emitted by the source ($24_2$) such that the deviated light is guided by said plate with parallel faces (62).

5. Device according to claim 4, wherein the light scattering area has the shape of a ring ($64_2$).

6. Device according to claim 4, wherein the light scattering area has the shape of a disc ($66_2$).

7. Device according to any of claims 4 to 6, wherein the light scattering area is a superficial rough area ($64_2$, $66_2$) of the plate with parallel faces (62).

8. Device according to claim 7, wherein the arithmetic roughness of the superficial rough area is greater than the wavelengths of the spectral domain to which belongs the light emitted by the source ($24_2$), and said arithmetic roughness is comprised in the interval ranging from 100 nm to 50 $\mu$m.

9. Device according to any of claims 4 to 7, wherein the plate with parallel faces (62) comprises two light scattering areas (74, 76) which are identical and are respectively situated facing each other, on two opposite faces of the plate with parallel faces.

10. Device according to any of claims 4 to 7, wherein the plate with parallel faces (62) comprises two light scattering areas (78, 80) which are different and are respectively situated facing each other, on two opposite faces of the plate with parallel faces.

11. Device according to any of claims 1 and 3 to 10, wherein the thickness of the plate with parallel faces (52, 62) is comprised in the interval ranging from 50 $\mu$m to 5 mm, preferably from 500 $\mu$m to 2 mm.

12. Method for correcting an optical signal emitted by an object ($14_1$, $14_2$, $14_3$) comprising the following steps:

- lighting the object by means of a light source ($24_1$, $24_2$, $24_3$),
- detecting the light emitted by the object under the effect of the illumination by the light source, by means of a first photodetector (32),
- deviating the light emitted by the source, upstream of the illuminated object, by means of a light guide, the latter guiding the deviated light to a reference photodetector (54), and comprising a plate with parallel faces (52, 62) which is transparent in the spectral domain of the illuminating light, and
- processing the signal produced by the first photodetector as a function of the signal detected by the reference photodetector.

13. Method according to claim 12, wherein the processing comprises a correction of the signal produced by the first photodetector (32) as a function of the signal detected by the reference photodetector (54).

8 ⌐

6 ⌐

10

2

4

# FIG. 1

4

2

10

8

# FIG. 2

FIG. 3A

FIG. 3B

18

## FIG. 4

## FIG. 5

FIG. 6

FIG. 7

FIG. 8

FIG. 9A

FIG. 9B

**FIG. 10**

**FIG. 11**

FIG. 12

FIG. 13

FIG. 14A

FIG. 14B

FIG. 15A

FIG. 15B

FIG. 16

**FIG. 17A**

**FIG. 17B**

**FIG. 18**

## RÉFÉRENCES CITÉES DANS LA DESCRIPTION

**Documents brevets cités dans la description**

- US 6511222 B1
- WO 2007031657 A

**Littérature non-brevet citée dans la description**

- **E. SCHULTZ et al.** *Biosensors and Bioelectronics,* 2008, vol. 23, 987-994
- **R. DAGNELIE et al.** Méthodes de mesure du formaldéhyde dans l'atmosphère. *Revue Air Pur,* 14-21
- **J.M. ELSON et al.** Relationship of the total integrated scattering from multilayercoated optics to angle of incidence, polarization, correlation-length, and roughness crosscorrelationproperties. *Appl.Opt.,* 1983, vol. 22, 3207